# EUROPEAN PATENT SPECIFICATION

(11) **EP 0 742 876 B1**
(45) Date of publication and mention of the grant of the patent: **07.06.2000**
(21) Application number: 95906912.1
(22) Date of filing: 31.01.1995
(51) Int. Cl.: F16K 1/52, F16K 47/08

(54) **RADIATOR VALVE**
HEIZKÖRPERVENTIL
ROBINET DE RADIATEUR

(30) Priority: 31.01.1994 DE 4402752
(43) Date of publication of application: 20.11.1996
(73) Proprietor: Danfoss A/S, 6430 Nordborg (DK)
(72) Inventor: KJAER, Ole, DK-8653 Them (DK); LUND, Hans, Henrik, DK-8870 Langa (DK)
(86) International application number: DK9500049
(87) International publication number: WO9520733

(56) References cited:
- DE-C- 2 936 027
- DE-C- 3 838 205
- SE-B- 448 769

## Description

The invention relates to a radiator valve having a housing and also a first throttle point which is formed between a valve seat and an axially adjustable closure member which is loaded in the opening direction by a restoring spring, and a downstream second throttle point which is formed by a gap between an annular face surrounding the valve seat, and a rotationally adjustable cylindrical pre-setting insert which has a vertically profiled end face, which by the restoring spring is pressed against the annular face surrounding the valve seat and masks an outlet opening in the circumferantial wall.

In a known radiator valve of that kind (DE 38 38 205 C2), the internal diameter of an inlet pipe inserted in the valve housing has a step, the inner part of which serves as the valve seat and the outer part of which serves as an annular face which co-operates with the presetting insert. In the circumferential wall surrounding the insert, there is an outlet opening which can be masked by the insert to a greater or lesser degree. Depending on the rotated angular position of the insert, in the region of the outlet opening a narrow gap or a selectable, larger opening is effective as the second throttle point.

Under certain operating conditions, radiator valves produce noise, which can be either singing or turbulence noise. This applies particularly when the valve is only slightly open, as is the case in sections of a heating system that are intended to have only a small maximum flow-through. Many measures have been proposed to eliminate this disadvantage. DE 22 57 196 B proposes associating a jacket that has tangential discharge slots with the closure member. According to DE 33 35 741 C2, inserts with throttle ducts are arranged in the outlet connector of the valve housing. From DE 41 07 969 A1 it is known to provide several flow-limiting bores in a rotationally adjustable cylindrical presetting insert; these bores can be brought selectively into connection with the outlet opening and widen conically in the direction of flow.

The invention is based on the problem of achieving a reduction in noise in a radiator valve of the kind mentioned in the introduction.

This problem is solved according to the invention in that the gap defined by the annular face surrounding the valve seat is axially offset in relation to the valve seat.

In this construction, the water is diverted first of all into the space between the valve seat and the closure member. The water emerging radially from there meets a closed circumferential wall, at which it is diverted again, and following that meets an end face leading to the gap, at which it is diverted a third time. A great deal of energy is removed from the water by these measures. Turbulence and noises associated with turbulence are reduced quite considerably. In addition, the circumferential wall surrounding the closure member forms a noise barrier which prevents noises occurring at the valve seat, especially singing, from being transmitted to the outside and being amplified by the radiator.

It is an advantage for the valve seat to project beyond the annular face. In that case the circumferential wall at which the second diversion takes place is formed entirely or predominantly by the cylindrical insert. Three distinct 90° diversions can be enforced, resulting in a quite considerable depletion of energy.

In a preferred embodiment, it is arranged that the annular face is formed by the base of an annular channel, the outer side wall of which is interrupted in the region of the outlet opening. The cylindrical insert engages in this annular channel. Only the gap located in the region of the outlet opening is effective in the direction of the second throttle point.

An alternative embodiment consists of having the annular face project beyond the valve seat. In that case, the circumferential wall that the water meets first is carried by a component that also has the valve seat.

The spacing between the valve seat and the annular face is preferably from 1 to 4 mm. Values below 1 mm are less effective. Values above 4mm lengthen the overall dimensions unnecessarily.

Usefully, the valve seat is provided at its inner circumference with a rounding. This avoids a sharp edge, which would lead to increased singing. At the same time, an approximately constant flow rate is achieved in the seat region. This further reduces the formation of noise, which is also dependent on velocity. As a whole, the water is guided around the seat with less turbulence.

Moreover, it is advisable for at least the gap-defining portion of the end face of the insert to be provided on its inner circumference with a rounding. This also avoids a sharp edge and the flow of water is diverted with little turbulence.

The gap is preferably from 0.4 to 4 mm wide. It is therefore a multiple of, in particular more than ten times greater than, the width of the space that is produced between the closure member and the valve seat at the smallest opening position and is about 0.05 mm.

It has proved advantageous for the presetting insert to be loaded by a spring and to bear against the annular face with two portions of its end face, while a third portion defines the gap, an adjoining fourth portion continuously enlarges the spacing from the annular face and a fifth portion runs at a constant larger spacing with respect to the annular face. Such a presetting insert co-operates with the outlet opening over a large angle-of-rotation range across the gap, but also allows larger openings in the region of the second throttle point.

The valve seat, annular face and the circumferential wall having the outlet opening can be formed in one piece with the housing. This involves a machining operation.

A preferred alternative consists in the valve seat, annular face and circumferential wall having the outlet opening being formed in one piece with an inlet pipe inserted in the housing. In this manner, production of the inlet pipe can be completed without difficulty.

In particular, the inlet pipe can be in the form of an injection-moulded plastics part. This allows inexpensive, high-precision mass production.

The invention is explained in greater detail hereinafter with reference to preferred embodiments illustrated in the drawings, in which
- Fig. 1: shows a longitudinal section through a radiator valve according to the invention,
- Fig. 2: is a developed view of a presetting insert,
- Fig. 3: is an enlarged view of the working region of a first embodiment,
- Fig. 4: is a view corresponding to Fig. 3 of a second embodiment, and
- Fig. 5: is a view corresponding to Fig. 3 of a fourth embodiment.

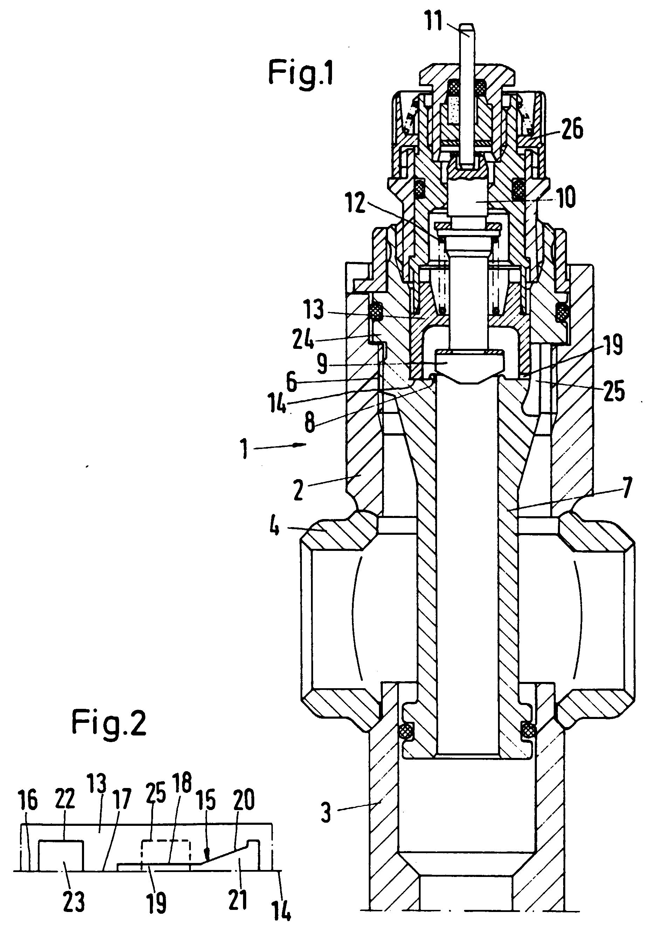

The radiator valve illustrated in Fig. 1 corresponds largely to a construction that is known from DE 38 38 205 C2. The valve housing 1 has an internally threaded connector 2, an inlet duct 3 and two outlet ducts 4. The threaded head 6 of an inlet pipe 7 is screwed into the internally threaded connector 2. The inlet pipe carries a valve seat 8 which co-operates with a closure member 9. The closure member is carried by a valve stem 10 which can be adjusted axially by means of a pin 11, which is displaceable, for example, by a thermostat top part, not shown; the valve stem is loaded by a restoring spring 12 in the opening direction.

The closure member 9 is surrounded by a cylindrical presetting insert 13 which is pressed by the restoring spring 12 against an annular face 14 on the inlet pipe surrounding the valve seat 8. The end face 15 of the insert 13 comprises two portions 16 and 17 with which the insert bears against the annular face 14, a third portion 18 which defines a gap 19, a fourth portion 20 which continuously enlarges the spacing from the annular face 14 so that an opening 21 is produced, and a fifth portion 22, which has a constant larger spacing from the annular face 14 and defines an opening 23. The insert 13 is surrounded by a circumferential wall 24 in which there is an outlet opening 25 that is connected to both outlet ducts 4 and 5. The presetting insert 13 can be rotated using a raisable rotary knob 26, so that selectively one of the openings 19, 21 and 23 can be caused to coincide with the outlet opening 25, with the result that a specific throttle resistance is set.

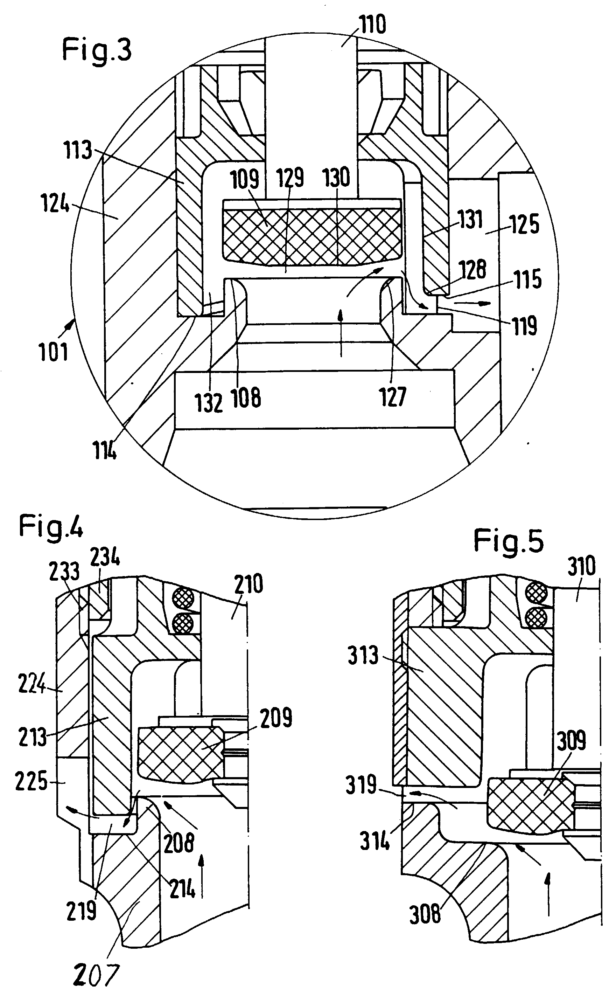

In the embodiment shown in Fig. 3, reference numbers increased by 100 have been used to denote corresponding parts. A fundamental difference from Fig. 1 consists in that the valve seat 108, annular face 114 and circumferential wall 124 are formed on the valve housing 101. The rounding 127 on the inner circumference of the valve seat 108 and the rounding 128 on the inner circumference of the end face 115 of the insert 113 are clearly shown.

It is very important in the invention that the valve seat 108, and consequently the space 129 between the closure member 109 and the valve seat 108, be offset axially with respect to the gap 119. The consequence of this is that the flow has to be diverted several times, as indicated by the arrows. The first diversion is effected at the face 130 of the closure member 109, the second diversion is effected at the inner circumferential face 131 of the insert 113 and the third diversion is effected at the annular face 114. A lot of energy is expended, which leads to a reduction in turbulence noise. In addition, the cylindrical insert 113 projects into the channel 132 surrounding the valve seat 108, so that the site at which singing is generated, that is, the space 129, is shielded from the outside.

In the embodiment shown in Fig. 4, reference numbers increased by 200 have been used for corresponding parts. The difference between this embodiment and the embodiment of Fig. 1 essentially consists in that the inlet pipe 207 is mounted by an internal thread 233 on a carrier member 234 fixed in the valve housing, and the outlet opening 225 is therefore located outside the thread. In contrast to how it was first shown in the drawings, the transition from the valve seat 208 to the gap 219 has no throttling device, because the further openings 21 and 23 distributed over the circumference provide a sufficiently large flow cross-section.

In the embodiment according to Fig. 5, in which reference numbers increased by 300 for corresponding parts are used, the annular face 314 projects beyond the valve seat 308. The gap 319 is defined by a fixed insert 313. Here too, the flow is diverted three times, although this is not as marked as in the above-described constructions.

The axial offset between the face of the valve seat 308 and the annular face 314 should lie between 1 and 4 mm, the value of about 2 mm having proved especially favourable. The roundings 127 and 128 preferably have a radius of 1 mm. Compared with a radiator valve according to DE 38 38 205 C2, the annular face 114 merely needs to be lowered, that is, a channel, such as 132, needs to be formed, so that the noise-reduction effects can be achieved with very little additional expense which can easily be accommodated in the normal production process. The effect can also be achieved, of course, by raising the valve seat 12 and using a shorter valve stem 10 or pin 11.

## Claims

1. A radiator valve having a housing (1) and also a first throttle point which is formed between a valve seat (18) and an axially adjustable closure member (9) which is loaded in the opening direction by a restoring spring (12), and a downstream second throttle point which is formed by a gap (19) between an annular face (14) surrounding the valve seat (8), and a rotationally adjustable cylindrical pre-setting insert (13) which has an axially profiled end face, which by the restoring spring is pressed against the annular face surrounding the valve seat and masks an outlet opening in a circumferential wall (24)surrounding the insert (13), characterized in that the gap (19; 119; 219; 319) defined by the annular face surrounding the valve seat (14; 114; 214; 314) is axially offset in relation to the valve seat (8; 108; 208; 308).

2. A radiator valve according to claim 1, characterized in that the valve seat (8; 108; 208) projects axially beyond the annular face (14; 114, 214).

3. A radiator valve according to claim 2, characterized in that the annular face (14; 114; 214) is formed by the base of an annular channel (132), the outer side wall of which is interrupted in the region of the outlet opening (25; 125; 225).

4. A radiator valve according to claim 1, characterized in that the annular face (314) projects axially beyond the valve seat (308).

5. A radiator valve according to one of claims 1 to 4, characterized in that the spacing between the valve seat (8) and the annular face (14) is from 1 to 4 mm.

6. A radiator valve according to one of claims 1 to 5, characterized in that the valve seat (108) is provided at its inner circumference with a rounding (127).

7. A radiator valve according to one of claims 1 to 6, characterized in that at least the gap-defining portion (18) of the end face (15) of the insert (13) is provided on its inner circumference with a rounding (128).

8. A radiator valve according to one of claims 1 to 6, characterized in that the gap (19) is from 0.4 to 4 mm wide.

9. A radiator valve according to one of claims 1 to 8, characterized in that the presetting insert (13; 113; 213) is loaded by a spring (12) and bears against the annular face (14) with two portions (16, 17) of its end face (15), while a third portion (18) defines the gap (19), an adjoining fourth portion (20) continuously enlarges the spacing from the annular face (14) and a fifth portion (22) runs at a constant larger spacing with respect to the annular face (14).

10. A radiator valve according to one of claims 1 to 9, characterized in that the valve seat (108), annular face (114) and the circumferential wall (124) having the outlet opening (125) are formed in one piece with the housing (101).

11. A radiator valve according to one of claims 1 to 9, characterized in that the valve seat (8, 208), annular face (14, 214) and circumferential wall (24; 224) having the outlet opening (25, 225) are formed in one piece with an inlet pipe (7; 207) inserted in the housing (1).

12. A radiator valve according to claim 11, characterized in that the inlet pipe (7) is in the form of an injection-moulded plastics part.

## Patentansprüche

1. Heizkörperventil mit einem Gehäuse (1) sowie einer ersten Drosselstelle, die zwischen einem Ventilsitz (18) und einem axial verstellbaren und in Öffnungsrichtung von einer Rückstellfeder (12) belasteten Verschlußstück (9) gebildet ist, und einer nachgeschalteten zweiten Drosselstelle, die durch einen Spalt (19) zwischen einer den Ventilsitz (8) umgebenden Ringfläche (14), die durch die Rückstellfeder gegen die den Ventilsitz umgebenden Ringfläche gepresst wird, und der Stirnfläche eines Einsatzes (13) gebildet ist, insbesondere eines drehverstellbaren zylindrischen Voreinstellungs-Einsatzes (13), der eine höhenprofilierte Stirnfläche aufweist und eine Austrittsöffnung in einer Umfangswand, die den Einsatz (13) umgibt, abdeckt, dadurch gekennzeichnet, daß der Spalt (19; 119; 219; 319), der von der den Ventilsitz umgebenden Ringfläche (14; 114; 214; 314) definiert wird, gegenüber dem Ventilsitz (8; 108; 208; 308) axial versetzt ist.

2. Heizkörperventil nach Anspruch 1, dadurch gekennzeichnet, daß der Ventilsitz (8; 108; 208) über die Ringfläche (14; 114; 214) übersteht.

3. Heizkörperventil nach Anspruch 2, dadurch gekennzeichnet, daß die Ringfläche (14; 114; 214) durch den Grund einer Ringnut (132) gebildet ist, deren äußere Seitenwand im Bereich der Austrittsöffnung (25; 125; 225) unterbrochen ist.

4. Heizkörperventil nach Anspruch 1, dadurch gekennzeichnet, daß die Ringfläche (314) über den Ventilsitz (308) übersteht.

5. Heizkörperventil nach einem der Ansprüche 1 bis 4, dadurch gekennzeichnet, daß der Abstand zwischen Ventilsitz (8) und Ringfläche (14) 1 bis 4 mm beträgt.

6. Heizkörperventil nach einem der Ansprüche 1 bis 5, dadurch gekennzeichnet, daß der Ventilsitz (108) am Innenumfang mit einer Rundung (127) versehen ist.

7. Heizkörperventil nach einem der Ansprüche 1 bis 6, dadurch gekennzeichnet, daß zumindest der spaltbegrenzende Abschnitt (18) der Stirnfläche (15) des Einsatzes (13) am Innenumfang mit einer Rundung (128) versehen ist.

8. Heizkörperventil nach einem der Ansprüche 1 bis 6, dadurch gekennzeichnet, daß der Spalt (19) eine Weite von 0,4 bis 4 mm hat.

9. Heizkörperventil nach einem der Ansprüche 1 bis 8, dadurch gekennzeichnet, daß der Voreinstellungs-Einsatz (13; 113; 213) durch eine Feder (12) belastet ist und mit zwei Abschnitten (16, 17) seiner Stirnfläche (15) an der Ringfläche (14) anliegt, während ein dritter Abschnitt (18) den Spalt (19) begrenzt, ein daran anschließender vierter Abschnitt (20) kontinuierlich den Abstand von der Ringfläche (14) vergrößert und ein fünfter Abschnitt (22) mit konstantem größerem Abstand zur Ringfläche (14) verläuft.

10. Heizkörperventil nach einem der Ansprüche 1 bis 9, dadurch gekennzeichnet, daß Ventilsitz (108), Ringfläche (114) und die Austrittsöffnung (125) aufweisende Umfangswand (124) einstückig mit dem Gehäuse (101) ausgebildet sind.

11. Heizkörperventil nach einem der Ansprüche 1 bis 9, dadurch gekennzeichnet, daß Ventilsitz (8, 208), Ringfläche (14, 214) und die Austrittsöffnung (25, 225) aufweisende Umfangswand (24; 224) einstückig mit einem in das Gehäuse (1) eingesetzten Zulaufrohr (7; 207) ausgebildet sind.

12. Heizkörperventil nach Anspruch 11, dadurch gekennzeichnet, daß das Zulaufrohr (7) als Kunststoff-Spritzgußteil ausgeführt ist.

## Revendications

1. Robinet de radiateur comportant un carter (1), et également un premier point d'étranglement formé entre un siège d'obturation (18) et un organe obturateur (9) réglable axialement, qui est sollicité par un ressort de rappel (12) dans la direction d'ouverture, et un second point d'étranglement situé en aval, formé par un interstice (19) entre une face annulaire (14) entourant le siège d'obturation (8), et une pièce cylindrique intégrée (13) de préréglage, pouvant être ajustée par rotation et munie d'une face extrême profilée axialement qui, sous l'action du ressort de rappel, est pressée contre la face annulaire entourant le siège d'obturation, et obture un orifice de sortie dans une paroi circonférentielle (24) ceinturant la pièce intégrée (13), caractérisé par le fait que l'interstice (19 ; 119 ; 219 ; 319), défini par la face annulaire entourant le siège d'obturation (14 ; 114 ; 214 ; 314), est décalé axialement par rapport audit siège d'obturation (8 ; 108 ; 208 ; 308).

2. Robinet de radiateur selon la revendication 1, caractérisé par le fait que le siège d'obturation (8 ; 108 ; 208) fait saillie axialement au-delà de la face annulaire (14 ; 114, 214).

3. Robinet de radiateur selon la revendication 2, caractérisé par le fait que la face annulaire (14 ; 114 ; 214) est formée par la base d'un canal annulaire (132) dont la paroi latérale extérieure est interrompue dans la région de l'orifice de sortie (25 ; 125 ; 225).

4. Robinet de radiateur selon la revendication 1, caractérisé par le fait que la face annulaire (314) fait saillie axialement au-delà du siège d'obturation (308).

5. Robinet de radiateur selon l'une des revendications 1 à 4, caractérisé par le fait que l'espacement, entre le siège d'obturation (8) et la face annulaire (14), est compris entre 1 et 4 mm.

6. Robinet de radiateur selon l'une des revendications 1 à 5, caractérisé par le fait que le siège d'obturation (108) est pourvu d'un arrondi (127) sur sa circonférence intérieure.

7. Robinet de radiateur selon l'une des revendications 1 à 6, caractérisé par le fait qu'au moins la zone (18) de la face extrême (15) de la pièce intégrée (13), qui définit l'interstice, est pourvue d'un arrondi (128) sur sa circonférence intérieure.

8. Robinet de radiateur selon l'une des revendications 1 à 6, caractérisé par le fait que la largeur de l'interstice (19) est comprise entre 0,4 et 4 mm.

9. Robinet de radiateur selon l'une des revendications 1 à 8, caractérisé par le fait que la pièce intégrée (13 ; 113 ; 213) de préréglage est sollicitée par un ressort (12) et porte contre la face annulaire (14) par deux zones (16, 17) de sa face extrême (15), tandis qu'une troisième zone (18) définit l'interstice (19), une quatrième zone attenante (20) accroît continûment l'espacement par rapport à la face annulaire (14), et une cinquième zone (22) s'étend selon un espacement supérieur constant vis-à-vis de la face annulaire (14).

10. Robinet de radiateur selon l'une des revendications 1 à 9, caractérisé par le fait que le siège d'obturation (108), la face annulaire (114), et la paroi circonférentielle (124) munie de l'orifice de sortie (125), sont façonnés d'une seule pièce avec le carter (101).

11. Robinet de radiateur selon l'une des revendications 1 à 9, caractérisé par le fait que le siège d'obturation (8, 208), la face annulaire (14, 214), et la paroi circonférentielle (24 ; 224) munie de l'orifice de sortie (25, 225), sont façonnés d'une seule pièce avec un tube d'admission (7 ; 207) inséré dans le carter (1).

12. Robinet de radiateur selon la revendication 11, caractérisé par le fait que le tube d'admission (7) revêt la forme d'une pièce en matière plastique venue de moulage par injection.
